# EUROPEAN PATENT APPLICATION

(11) **EP 4 797 301 A1**
(43) Date of publication of application: **26.08.2026**
(21) Application number: 26155693.0
(22) Date of filing: 02.02.2026
(51) Int. Cl.: H01G 11/10, H01G 11/76, H01G 11/78, H01M 50/258

(54) **SYSTEM FOR ENERGY STORAGE AND GENERATION**

(30) Priority: 03.02.2025 IT 202500001944
(71) Applicant: Uflex S.r.l., 16012 Busalla (GE) (IT)
(72) Inventor: GAI, Pietro, 16012 Busalla (GE) (IT); CATALDO, Simone, 16012 Busalla (GE) (IT)
(74) Representative: Bottino, Giovanni

(57) **Abstract**

Energy storage and generation system comprising at least one modular unit (1) comprising at least one supercapacitor cell and a battery management system (BMS), said modular unit (1) comprising an outer casing; said outer casing comprises a first portion (12) for housing said supercapacitor cell and a second portion (13) for housing said battery management system (BMS), said first portion (12) being superimposed on said second portion (13) along a vertical plane (P), said modular unit (1) being configured to be housed in a cavity.

## Description

The present invention relates to an energy storage and generation system comprising at least one modular unit comprising at least one supercapacitor cell and a battery management system (BMS), said modular unit comprising an external casing.

In recent years, energy storage and generation systems using supercapacitors have been gaining ground. A supercapacitor is an electrostatic device comprising an electrochemical cell comprising two electrodes-one positive and one negative-immersed in an electrolyte and separated by a separator, which does not cause the two electrodes to short-circuit but allows ions to pass through. A supercapacitor allows energy to be stored through the formation of double electric layers. Unlike conventional batteries, a supercapacitor does not store energy through chemical reactions, but through the separation of charges, which ensures a longer service life and greater efficiency in charging and discharging operations.

Today, there are an increasing number of possible scenarios in which supercapacitors-structured in modules and the modules in turn structured in systems-could be used. Among these, we can refer to the use of systems comprising supercapacitor modules for the purpose of storing energy inside buildings in order to support the building's electrical network in case of emergency.

However, the use of such systems in buildings, such as industrial buildings and factories, for the above purpose would require the provision of ad hoc spaces within the building, given the intrinsic bulkiness of multiple supercapacitor modules. This would inevitably result in a reduction in the space that can actually be used within the building.

One possible solution would be to place these modules **inside wall cavities.**

In the state of the art, document US2021/265848 A1 describes a modular integrated ultracapacitor apparatus (UCAP) for the storage and recharging of electrical energy. The apparatus comprises ultracapacitor cells and an integrated charging unit or charger unit. This unit is capable of accepting AC/DC input, charging the cells, and includes a USB port that can be used to support monitoring or control software. This apparatus comprises a protective enclosure that mechanically holds the ultracapacitor cells and the charging unit in place.

However, the device described in this document does not provide specifications suitable for housing within a wall cavity. Furthermore, the cubic shape shown in the figures would be difficult to fit into a cavity.

Document US2024/191497 A1 describes a modular and interconnectable structure that integrates energy storage systems for residential use. This structure includes an energy storage component such as a battery and a control system. The battery and control electronics are housed in a generic position inside a casing.

The structure described in this document cannot be used inside a wall cavity; unlike supercapacitors, batteries generate heat during charging and discharging due to internal losses. This heat must be dissipated effectively; a wall cavity, by its very nature, is a closed space with little ventilation and thermal insulation, which is therefore unfavorable for heat dispersion. Under such conditions, the temperature can rise progressively, accelerating battery aging, reducing efficiency, and, in the worst cases, triggering hazardous conditions such as thermal runaway in lithium batteries.

To date, there is no system for energy storage and generation capable of storing and, if necessary, releasing energy quickly, supporting a building's electrical grid in the event of peak demand or providing backup power in emergency situations, while at the same time offering the advantage of not requiring dedicated technical rooms within the building itself.

The present invention aims to solve the technical problems highlighted above by means of a system as described at the beginning, characterized in that said external case comprises a first portion housing said supercapacitor cell and a second portion housing said battery management system (BMS), said first portion being superimposed on said second portion along a vertical plane, said modular unit being configured to be housed in a cavity.

The term "cavity" in the following discussion refers to any space between and delimited by two walls or surfaces, of any shape. Consequently, the term "cavity" can refer, without distinction, to a space contained within a wall and delimited by two walls, as well as to any confined space delimited by a pair of surfaces of any shape. Preferably, this term refers to the space identified and delimited, within a wall of a building, by a pair of parallel walls.

Advantageously, said modular unit extends along a vertical plane, so that it can be housed "upright" in a cavity, preferably inside a wall of a building, for example resting on the ground or suspended. Consequently, the surface or face of said modular unit that can rest on the ground when said modular unit is housed in the cavity substantially coincides with the thickness of said unit.

Consequently, the term "first portion of the housing of said supercapacitor cell" refers to a first front portion of said modular unit housed "upright"; similarly, the term "second portion of the housing of said battery management system (BMS)" refers to a second rear portion of said modular unit housed "upright." The first portion, or front portion, overlaps the second portion, or rear portion, along a vertical plane; consequently, the first portion, or front portion, rests on the second portion, or rear portion, along a vertical plane.

Preferably, but not limited to, said modular unit has a substantially parallelepiped shape and, in the case of ground housing in said cavity, said modular unit rests on a surface or face that substantially coincides with the thickness of said modular unit itself.

Preferably, said thickness is limited, particularly in relation to the other dimensions of the at least one modular unit.

The modular unit may preferably have a thickness or depth of 120 millimeters, which is suitable for use of the system of the present invention within a wall cavity.

The term "building" may refer, by way of example and without limitation, to any type of building or industrial structure/warehouse, hospitals, data centers, residences and offices, energy-intensive industrial facilities that may require a system for energy storage and generation, possibly to be used to support the electrical network of the building itself.

According to one embodiment, said second portion of said outer case has a footprint that is smaller, along at least one direction, than the footprint of said first portion of said outer case.

Preferably, said first and second portions share at least the same lower surface, which corresponds to the lower surface of said modular unit, i.e., to said face of said modular unit which, in the case of ground housing of the same, rests on the ground when the modular unit is housed on the ground in the cavity.

With regard to the side faces, preferably said second portion has at least one side face that lies on a plane more internal than the plane on which the corresponding side face of said first portion lies.

Even more preferably, said second portion of the outer casing has a pair of side faces lying on planes that are more internal than the planes on which the pair of side faces of said first portion lie.

Consequently, according to a preferred but not limiting embodiment, said second portion of the outer casing of the modular unit is less wide than said first portion.

The first and second portions may also share the upper surface; alternatively, the upper surface or face of the second portion may lie on a horizontal plane that is lower than the horizontal plane on which the upper surface or face of the first portion lies.

Consequently, with respect to the second portion, the first portion of the outer case protrudes at least laterally.

According to one embodiment, said second portion comprises internal wiring and at least one wiring inlet/outlet.

Advantageously, the at least one modular unit of the system according to the present invention provides a separation, at the housing level, between the part relating to the at least one electrochemical cell of the supercapacitor, which is housed in the first portion, or front portion, of the modular unit itself, and the wiring and battery management system (BMS), which are instead housed in the second portion, or rear portion, of said modular unit. Said first portion may comprise one or more supercapacitor cells.

According to a preferred but not limiting embodiment, said wiring input/output is included on at least one of the surfaces or side faces of said second portion.

Preferably, both side faces of said second portion each include a wiring input/output.

According to one embodiment, said system comprises at least one electrical cable connecting said at least one modular unit to a power source. Preferably, said at least one electrical cable may connect to the at least one modular unit at said at least one wiring input/output located on at least one of the surfaces or side faces of said second portion.

Preferably, the system of the present invention comprises at least one pair of electrical cables configured to connect to said at least one modular unit at said wiring input/output located on both side faces of said second portion.

Said electrical cables preferably refer to power cables.

These cables, in particular, are made with a plurality of copper wires twisted together to form a conductor with a preferably rectangular cross-section; these cables, in addition to making a column stack of multiple modular units according to the invention more robust from a mechanical point of view, also allow the transport of high currents.

In a particular and advantageous embodiment, each of said power cables is a flexible insulated cable, sometimes known in the industry as a flexible shunt. Each cable comprises a central conductor body, which corresponds to the aforementioned plurality of twisted copper wires. The conductor body is preferably made of tinned electrolytic copper braid (e.g., Cu-ETP with a purity of 99.90%), with individual wires having a diameter of approximately 0.2 mm. The cross-sectional area of the conductor body may be, for example, 25 mm² .

The conductive body is also wrapped in an insulating coating that gives the cable its structural integrity and electrical safety. This coating is preferably a self-extinguishing polymer compound (e.g., PVC classified UL 94-V0) with a thickness that can be 1.9 mm. The mechanical properties of this coating, such as a tensile strength of 19 MPa and a maximum elongation of 365%, contribute to the required robustness.

The power cable thus formed is configured to operate at rated voltages up to 1500 V DC and in a temperature range from -40 °C to +105 °C, ensuring the transport of high currents. For example, such a cable is capable of sustaining a nominal current of approximately 181 A with a temperature rise of 55 °C. The overall structure of these cables makes them suitable for both electrical power connection and mechanical support for stacking modular units.

The use of these cables, in addition to ensuring installation within a cavity, prevents overheating in the event of higher currents.

Cables with a lower capacity, in the event of high currents, would lead to overheating of the entire system.

The latter problem, given that the system is installed inside a wall, would lead to general overheating of the system and the wall, and possible fire hazards.

All connections of one or more modular units are advantageously designed to accommodate the system covered by this invention inside a standard wall, i.e., in a wall cavity, without having to increase the volume of the existing cavity.

The term "energy source" can refer, without distinction, to an electrical network present in the building, an off-grid photovoltaic system or similar, an uninterruptible power supply and, more generally, any energy source suitable for powering a supercapacitor or possibly being powered by a supercapacitor.

Advantageously, when at least one electrical connection cable is plugged into the modular unit at the at least one wiring inlet/outlet present on at least one of the surfaces or side faces of said second portion, the cable itself does not exceed the dimensions of the first portion of the outer case; consequently, the electrical cable does not cause any additional volumetric dimensions with respect to the dimensions determined by the width of said first portion of the external case.

At the same time, said at least one modular unit may comprise other wiring points, preferably but not limited to being located on said second portion of the external case, even if not necessarily on the side surfaces, but for example on the rear surface, i.e., the surface of the second portion opposite the coupling surface with said first portion. Preferably, said wiring points refer to ports for the output of data cables of the battery management system.

The system of the present invention preferably comprises at least one additional electrical communication cable capable of connecting to the at least one modular unit at said other wiring points, said electrical cable preferably being a data cable of the battery management system.

Advantageously, connecting the system of the present invention to a power source, which is preferably the building's electrical grid, allows the system of the invention to quickly store energy, for example directly from the building's electrical grid, and, if necessary, release it into the building's electrical grid in the event of peak demand or emergency situations.

Alternatively, or in combination, the system covered by this invention is connected to additional energy sources, such as photovoltaic panels, when the latter are not directly connected to the electrical grid, so that at least one modular unit can store energy from the additional energy source, such as photovoltaic panels. alternatively, the system can receive energy from both, when the wiring of the photovoltaic panels connects directly to the electrical grid of the building to which the system that is the subject of the invention is connected.

According to one form of implementation, said at least one modular unit comprises first means for fixing it to said cavity inside a wall of a building. In particular, said modular unit comprises first means for fixing it to at least one of the walls delimiting the cavity.

Said first means of fixing may refer to mechanical means such as brackets or similar, but any suitable means of fixing known in the art may also be used.

These first fastening means ensure that at least one modular unit can be housed in the cavity, either standing on the ground and attached to at least one of the walls or, alternatively, suspended and attached to at least one of the walls delimiting the cavity.

According to one form of implementation, the system of the present invention comprises a plurality of modular units, said at least one electrical connection cable having a plurality of outputs, said modular units having a lower surface and an upper surface and being configured to be stacked with the lower surface of one resting on the upper surface of the other, said multi-output electrical cable electrically connecting said modular units to each other.

Advantageously, said system comprises a plurality of modular units stacked along a vertical plane in said wall cavity, so as to be able to advantageously store energy quickly, directly from the energy source, such as the electrical grid, and, if necessary, release it back into the building's electrical grid just as quickly in the event of peak demand or emergency situations without taking up usable space in the building itself.

From an aesthetic point of view, the system that is the subject of this invention, being housed in a cavity inside a wall of the building, is invisible to the naked eye to anyone occupying the building and does not affect the interior design of the building itself.

Preferably, said at least one electrical connection cable having a plurality of outputs is configured to electrically connect the plurality of modular units to each other, preferably at each wiring input/output. In this way, advantageously, the at least one electrical connection cable does not exceed the dimensions of the first portion of the modular unit and, consequently, does not require additional volumetric space for the system that is the subject of the present invention with respect to the dimensions of said first portion of the external casing of the modular unit. The at least one electrical cable also allows the system to be connected to a power source, such as the building's electrical network.

Advantageously, being able to bind said plurality of modular units within the cavity to at least one of the walls that define and delimit the cavity itself, by means of the first fastening means described above, allows-in combination with the uniform distribution along a vertical plane of said modular units-the stability of the wall itself to be improved, thanks to the additional rigidity provided by the system.

According to one form of implementation, said plurality of modular units comprises second fastening means configured to bind said modular units to each other.

The second fastening means may refer to any type of fastening means known in the prior art and suitable for binding the modular units together. Preferably, but not limited to, the second fastening means refer to mechanical fastening means.

According to a preferred but non-limiting embodiment, said second fastening means refer to a pair of pins located on each of said modular units at the upper surface of the unit and a pair of holes located correspondingly on the lower surface, in order to make the coupling integral once said modular units are stacked. Alternatively, said pins and holes may have their positions reversed, i.e., the pins on the lower surface and the holes on the upper surface.

The system of the present invention can stack any number of modular units, having electrical voltage and energy characteristics that vary depending on the application context of the system.

The invention also refers to a wall of a building comprising a pair of surfaces arranged parallel to each other, so as to identify a cavity, said wall comprising a system for storing and releasing energy according to one or more of claims 1 to 7.

The term surfaces preferably refers to walls, i.e., a pair of walls arranged parallel to each other, so as to identify a cavity inside said wall.

These and other features and advantages of the present invention will become clearer from the following description of some examples illustrated in the attached drawings, in which:
Fig. 1 illustrates a schematic representation of a modular unit according to one possible embodiment of the invention;
Fig. 2 illustrates a schematic representation of the system according to the present invention according to one possible embodiment.

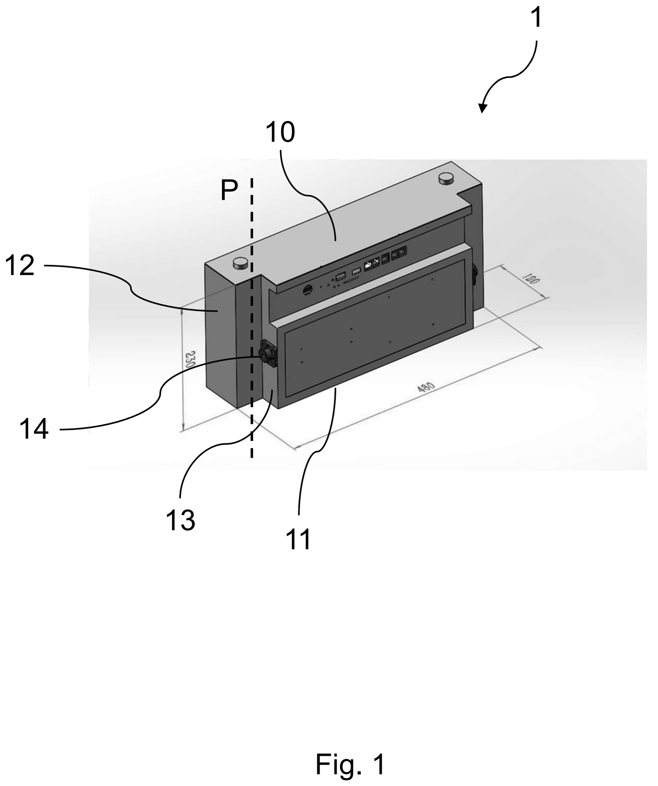

Figure 1 illustrates a modular unit 1 comprising an external casing which, in turn, comprises a first portion 12 for housing at least one supercapacitor cell and a second portion 13 for housing a battery management system (BMS) and internal wiring. In particular, the two portions are made of one piece, and the first portion 12 is superimposed on the second portion 13 along a vertical plane P. The overall dimensions of the second portion 13 are smaller than those of the first portion 12, in particular the width of the second portion 13 is smaller than the width of the first portion 12, in fact, the surfaces or side faces of the second portion 13 lie on planes that are more internal than the planes on which the surfaces or side faces of the first portion 12 lie. The modular unit 1 comprises an upper surface 10 and a lower surface 11. The second portion 13 comprises, on a surface or side face, at least one wiring inlet/outlet 14, preferably one per side face, configured to allow the connection of the modular unit 1 of the system that is the subject of this invention to the power source, such as the building's electrical network, by means of at least one electrical connection cable, preferably two, one per side face, not shown in the figure.

The said modular unit 1 also comprises other wiring points located on the rear surface of the said second portion 13 of the external case. The said wiring points refer to ports for the output of data cables of the battery management system.

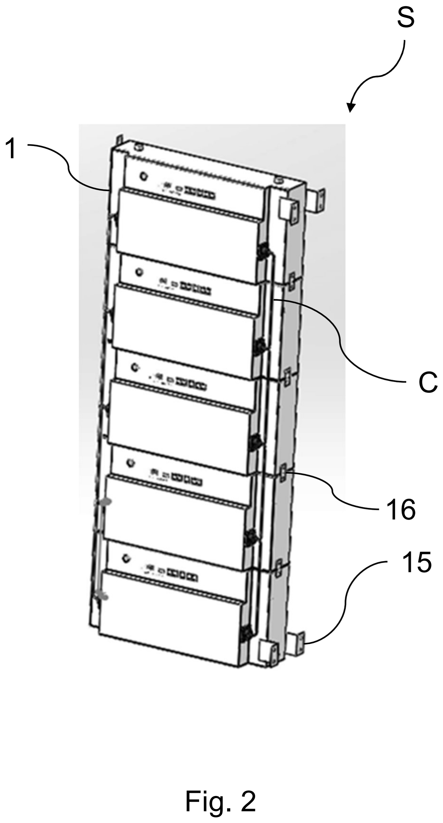

Figure 2 illustrates the system that is the subject of the invention, comprising a plurality of modular units 1, which are stacked with the lower surface of one resting on the upper surface of the other, where the first modular unit of said stack rests on the ground "standing" on a surface or face that corresponds to the thickness of the modular unit and, consequently, of the system. The modular units 1 are electrically connected to each other by two multi-output electrical connection cables C, one for each side of the second portion 13, which are plugged into said modular units 1 at the various wiring inputs/outputs 14. The modular unit at the base of the stack comprises first fastening means 15 - brackets - configured to bind the system, in particular the modular unit, to one or more of the walls that delimit and define the cavity where the system is housed. The modular units of the system include second fastening means 16 - pins and holes - configured to mechanically bind adjacent modular units together.

While the invention is susceptible to various modifications and alternative constructions, some preferred embodiments have been shown in the drawings and described in detail.

It should be understood, however, that there is no intention to limit the invention to the specific embodiment illustrated, but, on the contrary, it is intended to cover all modifications, alternative constructions, and equivalents that fall within the scope of the invention as defined in the claims.

## Claims

1. Energy storage and generation system comprising at least one modular unit (1) comprising at least one supercapacitor cell and a battery management system (BMS), said modular unit (1) comprising an outer casing,
**characterized in that**
said outer casing comprises a first portion (12) for housing said supercapacitor cell and a second portion (13) for housing said battery management system (BMS), said first portion (12) being superimposed on said second portion (13) along a vertical plane (P), said modular unit (1) being configured to be housed in a cavity.

2. System according to claim 1, wherein said second portion (13) of said outer case has a footprint that is smaller, along at least one direction, than the footprint of said first portion (12) of said outer case.

3. System according to claim 1 or 2, wherein said second portion (13) comprises internal wiring and at least one wiring inlet/outlet (14).

4. System according to one or more of the preceding claims, comprising at least one electrical cable connecting said at least one modular unit (1) to a power source.

5. System according to one or more of the preceding claims, wherein said at least one modular unit (1) comprises first fastening means (15) to said cavity.

6. System according to one or more of the preceding claims, comprising a plurality of modular units (1), said at least one electrical connection cable having a plurality of outputs, said modular units having a lower surface (11) and an upper surface (10) and being configured to be stacked by resting the lower surface (11) of one on the upper surface (10) of the other, said electrical cable (C) with multiple outputs electrically connecting said modular units (1) to each other.

7. System according to claim 6, wherein said plurality of modular units (1) comprises second fastening means (16) configured to bind said modular units (1) to each other.

8. Wall of a building comprising a pair of surfaces arranged parallel to each other, so as to identify a cavity, said wall comprising a system for the storage and release of energy according to one or more of claims 1 to 7.
